# EUROPEAN PATENT SPECIFICATION

(11) **EP 3 840 927 B1**
(45) Date of publication and mention of the grant of the patent: **08.11.2023**
(21) Application number: 19851723.7
(22) Date of filing: 21.05.2019
(51) Int. Cl.: B29C 49/00, B29B 11/14, C08F 110/02, C08F 2/38, B29L 31/00, B29C 49/58, B29C 49/46

(54) **POLYOLEFIN RESINS FOR CONTAINERS**
POLYOLEFINHARZE FÜR BEHÄLTER
RÉSINES DE POLYOLÉFINE POUR RÉCIPIENTS

(30) Priority: 21.08.2018 US 201862720576 P
(43) Date of publication of application: 30.06.2021
(73) Proprietor: LiquiForm Group LLC, Saline, MI 48176 (US)
(72) Inventor: CARPENTER, Gregory, Ann Arbor, Michigan 48103 (US); TEKIP, Theodore, Royal Oak, Michigan 48073 (US); MAKI, Kirk Edward, Tecumseh, Michigan 49286 (US); BLYSTONE, Mark Orson, Adrian, Michigan 49221 (US)
(74) Representative: Witte, Weller & Partner Patentanwälte mbB
(86) International application number: PCT/US2019/033280
(87) International publication number: WO 2020/040837

(56) References cited:
- EP-A1- 1 495 861
- EP-B1- 0 789 726
- WO-A1-2017/003773
- WO-A1-2018/106480
- JP-A- H09 216 915
- US-A1- 2007 087 214
- US-A1- 2009 036 610
- US-A1- 2009 283 939
- US-A1- 2013 192 173
- US-A1- 2013 213 982
- US-A1- 2015 017 365
- US-A1- 2016 194 421
- US-A1- 2017 312 972
- US-A1- 2017 326 779
- US-A1- 2018 022 905

## Description

### CROSS-REFERENCE TO RELATED APPLICATIONS

### FIELD

The present disclosure relates to containers formed of polyolefin resin.

### BACKGROUND

This section provides background information related to the present disclosure, which is not necessarily prior art.

Biaxial stretching is usually used to stretch and form polymers into plastic packages, using processes such as injection stretch bow molding (ISBM). Typically, the polymers used during such biaxial stretching operations orient and strengthen locally, providing measurable properties such as "strain hardening" or "crystallization" that minimize package ruptures. The most useful and widely used polymer having good orientation and localized strengthening properties during biaxial stretching is polyethylene terephthalate (PET). Manufacturers and fillers, as well as consumers, have recognized that PET packages are lightweight, inexpensive, recyclable and manufacturable in large quantities. Other polyolefin materials, such as high density polyethylene, are also desirable for use in forming packages, as discussed below.

Traditionally ISBM and filling have developed as two independent processes, in many cases operated by different companies. In order to make package filling more cost effective, some fillers have moved blow molding in house, in many cases integrating ISBM machines directly into their filling lines. The equipment manufacturers have recognized this advantage and are selling "integrated" systems that are designed to ensure that the blow molder and the filler are fully synchronized. Despite the efforts in bringing the two processes closer together, blow molding and filling continue to be two independent, distinct processes. As a result, significant costs may be incurred while performing these two processes separately.

Known methods of simultaneously forming and filling a package are disclosed in commonly-owned U.S. Pat. Nos. 8573964, 8714963, and 8858214. The methods disclosed therein require numerous pieces of equipment including a mold station comprising a pressure source, blow nozzle, stretch rod, and a mold cavity.

The technology for simultaneously forming and filling a package presents processing parameters which are not readily available when forming rigid plastic packages, such as bottles, using air. Unlike air, liquid, when used as a pressure source, does not significantly contract or expand with changes in temperature and pressure (incompressible). Additionally, the heat capacity for liquid is much higher than for air and fluctuations in liquid temperature during forming are not significant. Further, the incoming liquid temperature is settable (can be controlled to a specific set point) and can be used to manipulate material distribution of the plastic in the formed package. Finally, the volumetric flow rate of the injected fluid may be precisely controlled, to thereby control a rate of polymeric stretching during the injection process.

Currently, it is not practical to form packages from high density polyethylene (HDPE) using air. HDPE exhibits poor polymer orientation and localized strengthening during biaxial stretching processes when air is used as the pressure source. However, when using liquid as the pressure source, additional process controls are available to aid in repeatable control of material distribution for the minimization of package ruptures, including: (1) forming with and incompressible fluid, (2) controlling the fluid temperature, and (3) precision control of the volumetric flowrate for forming. It is desirable to identify and to optimize the HDPE resin properties that lend themselves to the simultaneous formation and filling of packages. It is further desirable to identify the forming conditions (e.g. liquid temperature; forming speed) that optimize package to package consistency. Finally, it is desirable to identify how changes to forming conditions impact end package properties. US 2009/036610 A1 discloses an enhanced environmental stress crack resistance (ESCR) bimodal high density polyethylene (HDPE) for blow molding applications. WO 2017/003773 A1 discloses multi-layered films oriented in the machine direction and articles comprising the same. US 2015/017365 A1 discloses a multimodal polyolefin resin and a molded product prepared therefrom. US 2009/283939 A1 discloses polyolefin compositions, articles made therefrom and methods for preparing the same. US 2016/194421 A1 discloses polyethylenes with increased molecular weight distribution. WO 2018/106480 A1 discloses multilayer films and methods of making the same. EP 0 789 726 B1 discloses a molding composition, a method of preparation, a method of molding, and molded articles. JP H09 216915 A discloses polyethylene for blow molding. US 2018/022905 A1 discloses HDPE.

The present disclosure advantageously provides for a preform configured to form a container when the preform is seated in a cavity of a mold and the preform is expanded within a cavity of a mold by introducing an incompressible fluid under a blow pressure into the preform to stretch the preform to assume a shape of the surrounding cavity, the preform comprising. The present disclosure provides numerous additional advantages and unexpected results as set forth herein, and as one skilled in the art will appreciate.

### SUMMARY

This section provides a general summary of the disclosure, and is not a comprehensive disclosure of its full scope or all of its features.

The invention is defined by the appended claims. The present disclosure includes a preform configured to form a container when the preform is seated in a cavity of the mold and the preform is expanded within the cavity of a mold by introducing an incompressible fluid under a blow pressure into the preform to stretch the preform to assume a shape of the surrounding cavity. The preform includes a high-density polyethylene (HDPE) resin having: a melt flow index of between 0.3 and 10.0 grams per 10 minutes at a temperature of 190°C under 2.16 kilograms of load through a test fixture of ASTM D1238 [5]; a polydispersity index of 4 - 24; and a density of between 0.943 and 0.965 grams per cubic centimeter.

Further areas of applicability will become apparent from the description provided herein. The description and specific examples in this summary are intended for purposes of illustration only and are not intended to limit the scope of the present disclosure.

### DRAWINGS

The drawings described herein are for illustrative purposes only of selected embodiments and not all possible implementations, and are not intended to limit the scope of the present disclosure.
Figure 1 is a cross-sectional view of a system for simultaneously forming and filling a container from a preform, the preform made from high-density polyethylene in accordance with the present disclosure;
Figure 2 illustrates area 2 of Figure 1 as a close-up view;
Figure 3 illustrates an exemplary container formed from a preform in accordance with the present teachings;
Figure 4A illustrates exemplary properties of preforms according to the present teachings;
Figure 4B illustrates additional exemplary properties of preforms according to the present teachings; and
Figure 4C illustrates further exemplary properties of preforms according to the present teachings.

Corresponding reference numerals indicate corresponding parts throughout the several views of the drawings.

### DETAILED DESCRIPTION

Example embodiments will now be described more fully with reference to the accompanying drawings.

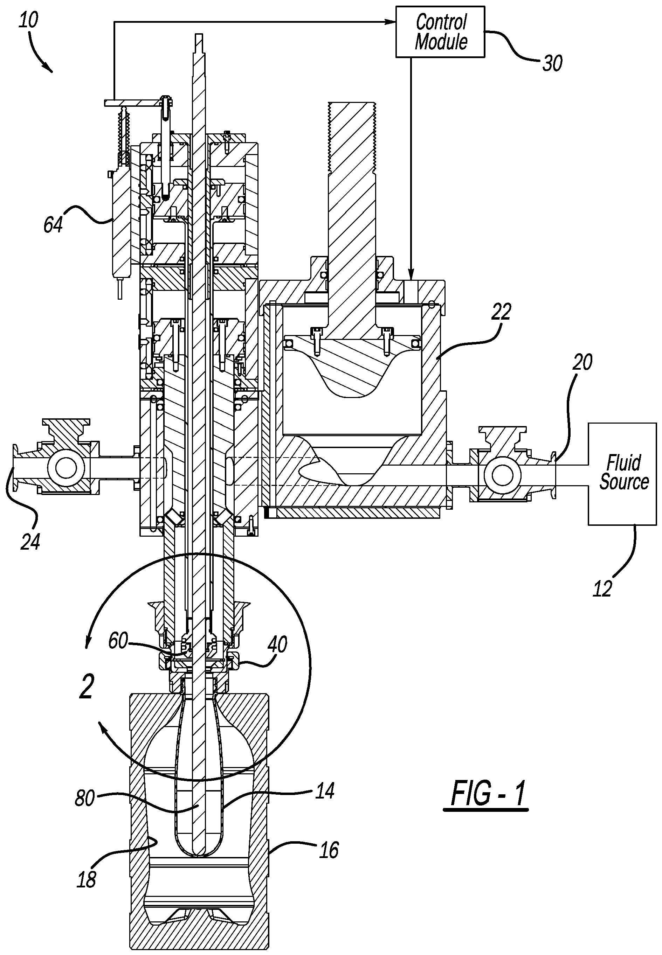

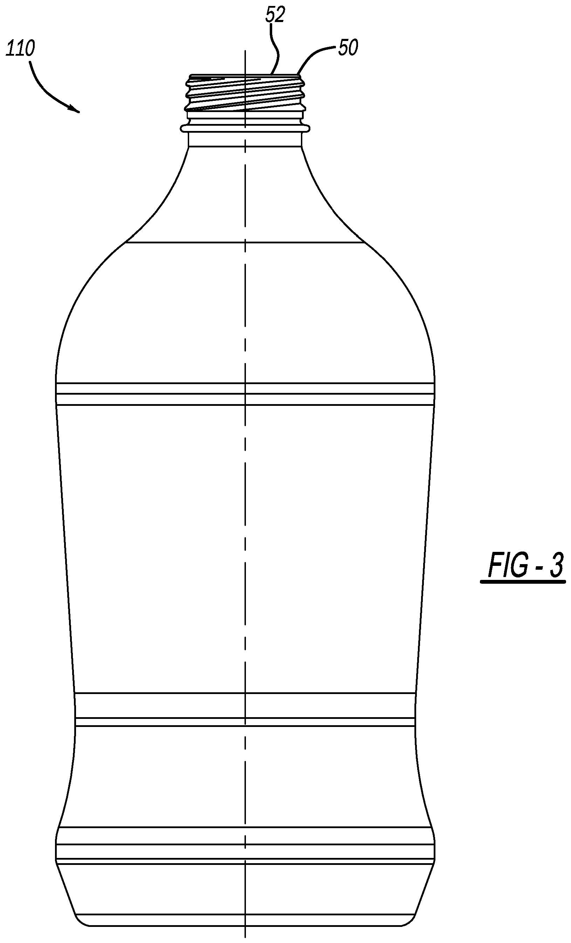

Figure 1 is a cross-sectional view of a container forming and filling system 10. The system 10 can be connected to any suitable fluid source 12 for simultaneously forming and filling any suitable polymeric container (such as container 110 of Figure 3) from a preform 14. Any suitable fluid can be used. For example, water, juice, flavored drinks, carbonated soda, detergents, oils, chemicals, and the like. The fluid expands the preform 14 within any suitable mold 16, which has an inner mold surface 18 defining any suitable container shape.

Specifically, fluid from the fluid source 12 passes through fluid inlet 20 into a fluid/filing cylinder 22. Excess fluid exits the system 10 through a fluid outlet 24. The fluid cylinder 22 controls the fill velocity at which fluid flows into the preform 14. The fluid cylinder 22 is controlled by a control module 30. In this application, the term "control module" may be replaced with the term "circuit." The term "control module" may refer to, be part of, or include processor hardware (shared, dedicated, or group) that executes code and memory hardware (shared, dedicated, or group) that stores code executed by the processor hardware. The code is configured to provide the features of the system 10, and the control module 30 thereof, described herein.

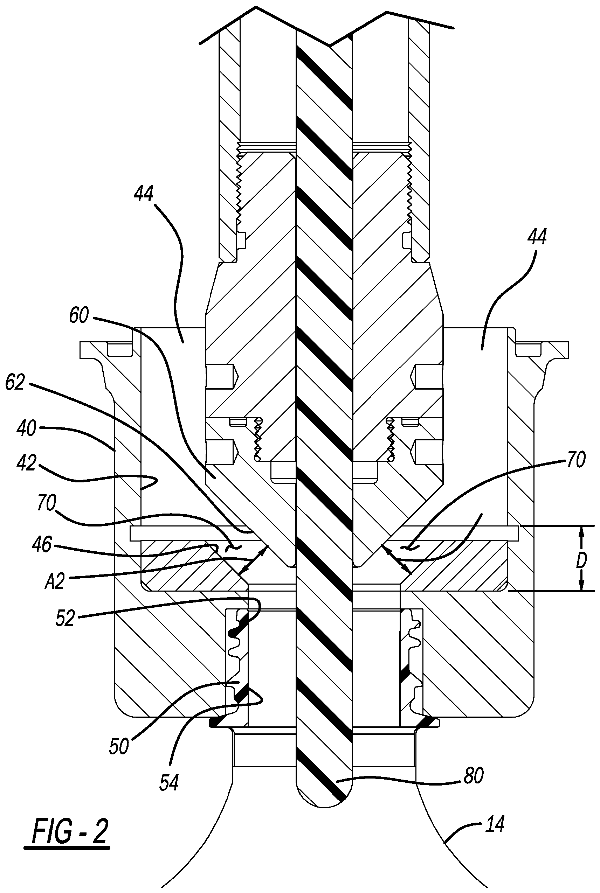

With continued reference to Figure 1, and additional reference to Figure 2, the fluid cylinder 22 injects the fluid to a nozzle 40, and specifically to a fluid path 44 defined by a nozzle receptacle 42 of the nozzle 40. Connected to the nozzle 40 is a finish 50 of the preform 14 and the container 110 formed therefrom. The finish 50 defines an opening 52 through which the fluid is injected.

Seated within the nozzle receptacle 42 is a seal pin 60. The seal pin 60 includes a sealing surface 62, which is arranged opposite to a nozzle sealing surface 46 of the nozzle 40. In a closed position, the seal pin 60 is arranged such that the sealing surface 62 abuts the nozzle sealing surface 46 in order to prevent fluid from flowing through the nozzle 40 and into the preform 14. From the closed position, the seal pin 60 is movable to an open position, such as illustrated in Figure 2. When the seal pin 60 is open, the sealing surface 62 is spaced apart from the nozzle sealing surface 46 to define a nozzle passage 70 therebetween. Fluid flowing from the fluid cylinder 22 and through the fluid path 44 can thus flow through the nozzle passage 70 to the finish 50, and specifically through the opening 52 of the finish 50 in order to form and fill the container from the preform 14. The position of the seal pin 60, such as in a closed position or any degree of an open position, is detected with any suitable seal pin position detector or sensor 64 (see Figure 1). Any suitable seal pin position detector 64 can be used, such as any suitable laser sensor or linear variable differential transducer (LVDT). The control module 30 receives inputs from the seal pin position detector or sensor 64 so that the control module 30 knows the position of the seal pin 60.

A stretch rod 80 is included to facilitate stretching of the preform 14 into the mold 16. The stretch rod 80 extends within and beyond the seal pin 60, and is movable independent of the seal pin 60. As fluid is injected into the preform 14, the stretch rod 80 is positioned so as to extend through the finish 50 to a bottom surface of the preform 14, such as is illustrated in Figure 1. Thus the presence of the stretch rod 80 within the finish 50 reduces the area of the opening 52 through which fluid can flow into the preform 14.

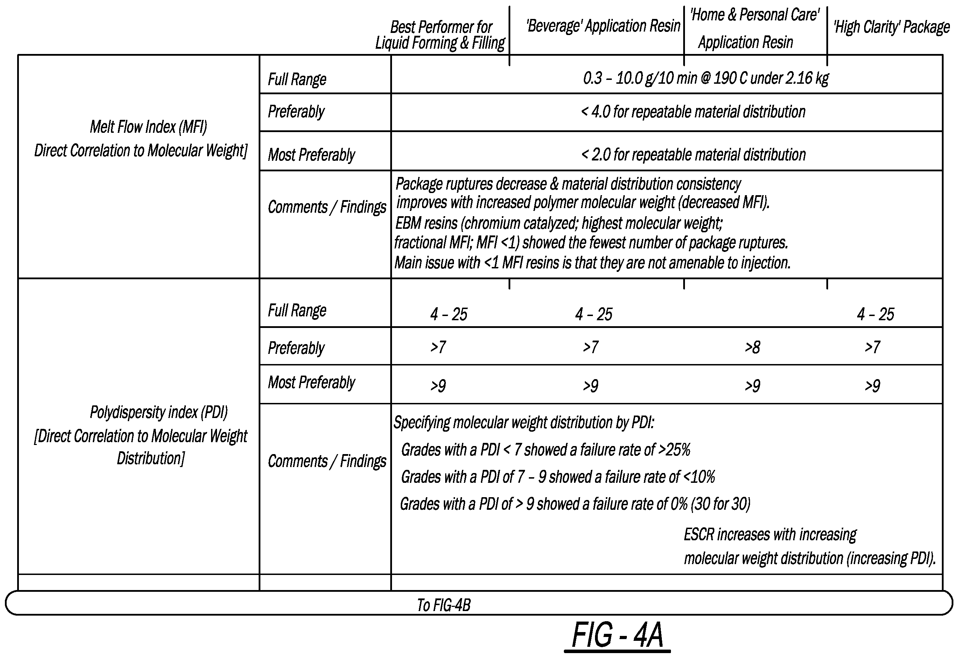

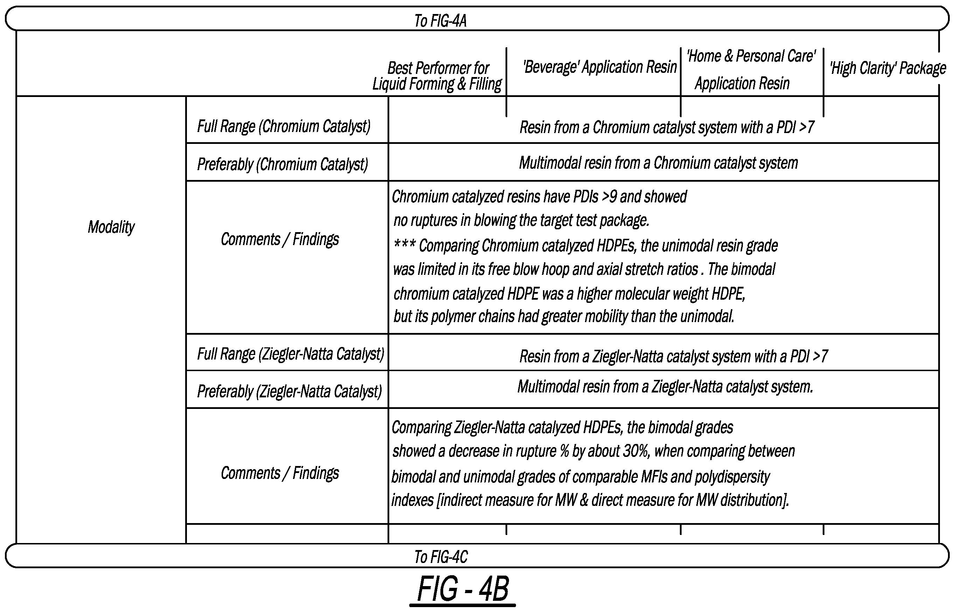

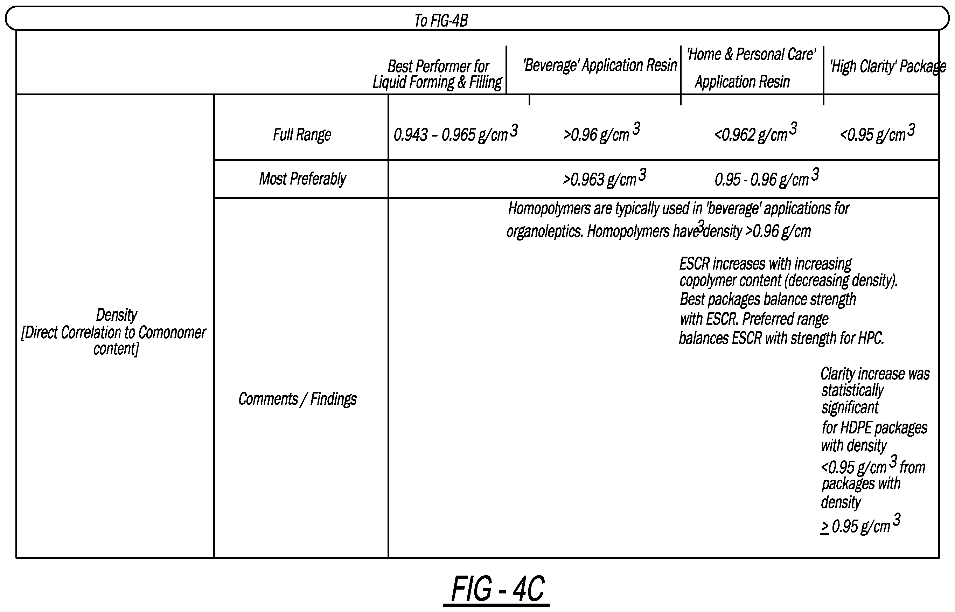

The preform 14 is made of high-density polyethylene (HDPE) resin. Material distribution during simultaneous forming and filling of a container (such as the container 110) from the preform 14 made of HDPE resin is highly dependent on the resin microstructure. HDPE commercial resin grades vary in several characteristics that potentially impact the extent to which the polymer will distribute when biaxially oriented. Exemplary HDPE resin parameters for the preform 14 and exemplary resulting container 110 are described herein, and set forth in Figures 4A, 4B, and 4C.

### (1) Molecular Weight [Indirectly measured as inversely proportional to MFI]

HDPE resin grades for extrusion blow molding (EBM) applications are higher in molecular weight than HDPE resin grades chosen for injection applications. The longer the polymer chain, the higher the molecular weight. Melt strength in the extruded EBM parison increases with increasing polymer chain length. It is expected that the increase in the melt strength in EBM translates to increased polymer entanglement for even stress distribution during biaxial orientation. A balance must be sought for the injectability to preforms (shear thinning nature) and the chain length needed to maintain integrity during biaxial orientation.

### (2) Molecular Weight Distribution [Directly reported as the polydispersity index (POI))

Polymer weight dispersity may impact material distribution consistency. Molecular weights in HDPE resins range from highly uniform to widely dispersed (see "A Guide to Polyolefin Blow Molding," LyondellBasell Industries, pp. 1 - 57). The molecular weight distribution is highly dependent on the catalyst system used, the use of a single reactor or multiple reactors in series, and the comonomers. Resins selected for this commercial screening span the commercially available densities, catalyst systems and modalities.

HDPE can be generated with reactors in series. Interlacing longer polymer chains with shorter chains of HDPE yield the following benefits, which may increase material distribution consistency in ISBM:

(a) Low molecular weight polymer chains have a fast initial rate of shear thinning within the melt (see "B5845 Bimodal Molecular Weight Polyethylene for Blow Molding," Total Petrochemicals USA, Inc.). Low shear mobility of polymer within the resin matrix eases processability (see Id.). Low shear mobility of polymer may aid in material distribution consistency.

(b) The high molecular weight 'tie molecules' act to generate a physical network between the crystal regions of lower molecular weight polymers (see Cazenave, J. et al. "Structural Approaches of Polyethylene Environmental Stress-Crack Resistance," Oil & Gas Science and Technology Vol. 61, No. 6, pp. 735-742 (2006); see Chen, Y. et al., "Structure and Rheological Property Relationship of Bimodal Polyethylene with Improved Environmental Stress Cracking Resistance," Polymer Science, Ser. A, Vol 56 No 5, pp. 671-680 (2014)). As the lower molecular weight polymers begin the initial deformation, the higher molecular weight polymers will act to branch between these more mobile regions.

(c) Rheological profiling of bimodal ethylene (BE) HDPE grades show that an increase in the fraction of the higher molecular weight polymer in the HDPE melt increases the elasticity of the melt (ability to recover from applied deformation force) (see Chen, Y. et al., "Structure and Rheological Property Relationship of Bimodal Polyethylene with Improved Environmental Stress Cracking Resistance," Polymer Science, Ser. A, Vol 56 No 5, pp. 671-680 (2014)). The attributes of early chain mobility, elastic recovery and a linked physical network between crystalline sections make multimodal HDPE resin grades appealing to an ISBM process.

### (3) Co-Polymer Content [Indirectly measured by the density of the resin]

Density of HDPE is a result of (1) ethylene / comonomer molar ratio; (2) temperatures within the reactors; (3) catalyst type. Homopolymer HDPE resin grades are expected to have highest density and stiffness, but the poorest ESCR and no entanglement due to side chains. For an example of a homopolymer with poor ESCR and high density (see UNIVAL^{™} DMDA-6400 NT 7, "High Density Polyethylene Resin). Addition of "comonomers" decreases density, crystallinity, and stiffness while increasing ESCR, toughness and clarity (see "A Guide to Polyolefin Blow Molding," LyondellBasell Industries, pp. 1 - 57). The 'stiffness' and the 'entanglement' extent of the resin is expected to impact the material distribution consistency.

### Molecular Weight

Package ruptures decrease & material distribution consistency improves with increased polymer molecular weight (decreased MFI).
(1) EBM resins (highest molecular weight; fractional MFI; MFI <1) showed the fewest number of package ruptures.
(2) Main issue with EBM resins is that HDPE resin grades with MFIs <1 are not amenable to injection.

### Modality

Multimodality aids the mobility of the polymer chains during the biaxial orientation.
(1) Comparing Ziegler-Natta catalyzed HDPEs, the multimodal grades showed a decrease in rupture percentage by about 30%, when comparing between multimodal and unimodal grades of comparable MFIs and density.
(2) Comparing Chromium catalyzed HDPEs, the unimodal resin grade was limited in its hoop and axial stretch ratios. The multimodal chromium catalyzed HDPE was a higher molecular weight HDPE, but its polymer chains had greater mobility than the unimodal.

### Copolymer Content

Copolymer content increases lead to an increase in the rupture frequency. Higher copolymer content decreases the energy needed to deform the material.
(1) Unimodal HDPEs with densities < 0.955 all had rupture percentages of >28%. Whereas unimodal HDPEs with densities > 0.955 & MFIs < 6 all had rupture percentages of < 10%. Therefore, package failures decrease with decreasing copolymer content.
(2) Homopolymer resins have an unacceptable ESCR for the HPC market.

### Liquid Flow Rate Analysis

Simultaneous forming and filling of HDPE packages is possible using liquid flowrates in excess of 6.0 L/sec down to 0.5 L/sec. Using any of the resins described herein, optimal package formation is obtained when the liquid flowrates is less than 3.0 L/sec. A preferred liquid flowrate should be in the range of 0.5 to 3.0 L/sec.

Simultaneous forming and filling of HDPE packages is additionally possible using injection liquid temperature in the range of 85°C down to 9°C. Using any of the resins described herein, optimal package formation is obtained when the liquid temperature is less than 45°C. A preferred incoming fluid temperature is between 9°C to 30°C.

In the cases where a stretch rod is used to aid in axially stretching the preform during simultaneous forming and filling of an HDPE package using any of the resins described herein, optimal package formation is obtained when the stretch rod reaches the base of the mold by the time the package is 0-50% formed. Preferably, the stretch rod should reach the base of the mold with less than 20% of the end volume of fluid introduced to the package.

### Package from Process

Evaluating containers simultaneously formed and filled using the preform 14 formed of any of the resins described herein, liquid temperature can be used as a driver to impact end package crystallinity. Optimal package formation is obtained when forming packages with an injection liquid temperature less than 45°C. When formed using an injection liquid temperature less than 45°C, a lower crystallinity is obtained than in the packages formed at 63°C. The lower the liquid temperature for forming, the lower the percent crystallinity in the upper panel of the end container. Lower crystallinity is desirable as this results in greater clarity, and higher ESCR. Accordingly, during simultaneous forming and filling of an HDPE package using any of the resins described herein, optimal package formation is obtained when the injection fluid temperature is less than 45°C to minimize end package crystallinity.

### Exemplary Compositions for HDPE Preforms 14 In Accordance with the Present Disclosure

The present disclosure provides for various HDPE resins, any of which the preform 14 may be molded from. In general, HDPE resins in accordance with the present disclosure vary in three major physical property descriptors: (1) Molecular Weight [Interpreted from Melt Flow Index (MFI)]; (2) Molecular Weight Distribution [Measured by polydispersity index (PDI)]; and (3) Comonomer content [Interpreted from Density]. Properties of various exemplary HDPE resins from which the preform 14 may be molded are described below and set forth in Figures 4A, 4B, and 4C.

In one embodiment, an HDPE resin for use in a simultaneous blowing and filling operation includes the following physical properties:
1) Molecular weight - MFI ranging from 0.3 - 10.0 g/10 min @ 190 C under 2.16 kg.
   a. Preferably, MFI should be ≤ 4.0 for repeatable material distribution.
   b. Most preferably, MFI should be < 2.0 for repeatable material distribution.
2) Molecular Weight Distribution - PDI of 4 - 25.
3) For resins generated with a Ziegler-Natta catalyst system or resins that are chromium catalyzed, where the resin has a MFI > 1 g/10min @ 190 C under 2.16 kg, a multimodal resin is preferred.
4) Density of 0.943 - 0.965 g/cm³.

In another embodiment, the present disclosure describes an HDPE resin for use in a simultaneous blowing and filling operation suitable for manufacturing packages for the 'beverage' market. The resin includes the following physical properties:
1) Molecular weight - MFI ranging from 0.3 - 10.0 g/10 min @ 190 C under 2.16 kg.
   a. Preferably, MFI should be ≤ 4.0 for repeatable material distribution.
   b. Most preferably, MFI should be < 2.0 for repeatable material distribution.
2) Molecular Weight Distribution - PDI of 4 - 25.
3) For resins generated with a Ziegler-Natta catalyst system or resins that are chromium catalyzed, where the resin has a MFI > 1 g/10min @ 190 C under 2.16 kg, a multimodal resin is preferred.
4) Density > 0.96 g/cm³.

In another embodiment, the present disclosure describes an HDPE resin for use in a simultaneous blowing and filling operation suitable for manufacturing packages suited to environments requiring chemical resistance. The resin includes the following physical properties:
1) Molecular weight - MFI ranging from 0.3 - 10.0 g/10 min @ 190 C under 2.16 kg.
   a. Preferably, MFI should be ≤ 4.0 for repeatable material distribution.
   b. Most preferably, MFI should be < 2.0 for repeatable material distribution.
2) Molecular Weight Distribution - PDI > 9.
3) For resins generated with a Ziegler-Natta catalyst system or resins that are chromium catalyzed, where the resin has a MFI > 1 g/10min @ 190 C under 2.16 kg, a multimodal resin is preferred.
4) Density <0.962 g/cm³.

In another embodiment, the present disclosure describes an HDPE resin for use in a simultaneous blowing and filling operation suitable for manufacturing packages having a high opacity. The resin includes the following physical properties:
1) Molecular weight - MFI ranging from 0.3 - 10.0 g/10 min @ 190 C under 2.16 kg.
   a. Preferably, MFI should be ≤ 4.0 for repeatable material distribution.
   b. Most preferably, MFI should be < 2.0 for repeatable material distribution.
2) Molecular Weight Distribution - PDI of 4 - 25.
3) For resins generated with a Ziegler-Natta catalyst system or resins that are chromium catalyzed, where the resin has a MFI > 1 g/10min @ 190 C under 2.16 kg, a multimodal resin is preferred.
4) Density <0.95 g/cm³.

Process conditions were also discovered to optimize package forming consistency using any of the above described HDPE resins. In one embodiment, an HDPE resin having one or more of the above properties was simultaneously formed into a package and was filled, where the liquid flowrate is within a range of 0.5 to 3.0 L/sec.

In another embodiment, an HDPE resin having one or more of the above properties was simultaneously formed into a package and was filled, where the fluid temperature is within a range of 9 to 30 °C.

In another embodiment, an HDPE resin having one or more of the above properties was simultaneously formed into a package and was filled, where a stretch rod is used to aid in axially stretching the preform. The stretch rod optimally reaches the base of the mold with less than 20% of the end volume is introduced during the forming process, with the rest of the volume introduced after the stretch rod reaches the base of the mold.

Finally, a temperature of the injection fluid was modified to optimize the crystallinity of a package formed using any of the above described HDPE resins. In one embodiment, an HDPE resin having one or more of the above properties was simultaneously formed into a package and was filled, where the injection fluid temperature is less than 45°C. Forming at this temperature results in lower crystallinity, leading to greater clarity and higher Environmental Stress Crack Resistance ("ESCR").

The present disclosure provides numerous advantages. For example, polyethylene comes in many different forms, including: very low density, low density, linear low density, medium density, cross-linked, high density, and ultra-high molecular weight. Compared to lower density variations, high density polyethylene is very linear and has much fewer branches; the lack of branching allows the molecules to pack closer together making the polyethylene denser than those with many branches. The ability of the system 10 to form containers out of polyolefin resins greatly increases the value of the system 10. Polyethylene terephthalate (PET) containers can advantageously be produced on the same system as olefins (specifically HDPE), reducing the number of different machines in a single plant.

### Glossary of Terms

Adjusted Sum of Squares - Quantifies the variation between sets. The greater the Adj SS, the more significant the factor impacts the outcome.

ANOVA (Analysis of Variance) - Analysis of the difference between 3 or more group means to determine if the populations statistically significantly different from each other.

Axial - Extending in the direction perpendicular to the cyclic plane of the preform cross section. In the plane parallel to the extending stretch rod.

Biaxial - Relating to two axes. In the case of the stretch formation of packages, the axes referenced are the hoop and the axial.

Bimodal - In reference to multiple modes of molecular weights, please see 'multimodal'

Blow out - A rupture or a failure in the integrity of the packaging.

BOR (Blow out ratio) or BUR (Blow-up ratio) - The product of the axial stretch ratio and the hoop stretch ratio.

Comonomer - Monomer included in the generation of a polymer, aside from the primary monomer. In the case of HDPE, the alpha olefin comonomers include butene, hexene and octene.

Copolymer - A polymer resulting from the polymerization of the primary monomer with a comonomer.

Crystallization - The parallel alignment of polymers.

DOE (Design of Experiments) - The design of a statistical analysis in order to describe the source of the variation.

DSC (Differential scanning calorimetry) - A thermoanalytical technique for the determination of the amount of energy required to increase the temperature of the sample.

EBM (Extrusion Blow Molding) - A process for package formation involving the extrusion of a melted parison into a mold. Air is then blown into the parison, inflating into the mold.

Enthalpy - Energy per unit mass needed to change the temperature of the material.

ESCR (Environmental Stress Crack Resistance) - The resistance of material to failure due to chemical attack.

Factors - In DOE, the independent variables that can be altered in order to explore the sources of variation.

Free Blow - Blowing of a preform without the restriction of a mold.

HDPE (High Density Polyethylene) - Polymer composed primarily from the polymerization of ethylene monomers. Density range for HDPE is defined as 0.941 to 0.965 g/cm3

HMFI (High Melt Flow Index) - Referring to the g/10 min flow rate of the polymer through a ASTM D1238 die under the conditions of 190 C and under 21.6 kg. of load through an extrusion plastometer test fixture with die orifice diameter of 2.0955 mm and length of 8.000 mm (see ASTM D 1238, "Standard Test Method for Melt Flow Rates of Thermoplastics by Extrusion Plastometer").

Homopolymer - Polymer formed from one type of monomer.

Hoop - Extending in the cylindrically symmetrical direction (perpendicular to the stretch rod / axial plane).

HPC (Home and Personal Care) - Products related to home and to personal cleanliness.

Incompressible - Density (mass per volume) does not change under the application of force.

ISBM (Injection Stretch Blow Molding) - A process for package formation involving the inflating of a re-heated preform into a mold.

Lenth's PSE (Pseudo standard error) - Measure determining if effects observed are sparse or significant via comparison to a calculated pseudo standard error.

Levels - In DOE, the different settings / values for the factors (independent variables).

Main effector - A factor which has a significant effect on the output from the process.

MFI (Melt Flow Index) - Referring to the g/10 min flow rate of the polymer through a ASTM D1238 die under the conditions of 190 C and under 2.16 kg. of load through an extrusion plastometer test fixture with die orifice diameter of 2.0955 mm and length of 8.000 mm (see ASTM D 1238, "Standard Test Method for Melt Flow Rates of Thermoplastics by Extrusion Plastometer").

Multimodal - *Referring to several distributions having separate maxima.

MW (Molecular Weight) - For the individual polymer, this is the mass of the polymer calculated as the sum of the atomic weights of the individual constituents. For a polymer melt, this is the average of the molecular weights for all of the polymers in the melt.

Opacity - The measure for the transparency of the analyte.

p-value - If p < 0.05, we can reject the null hypothesis that the individual sets will be equal.

Pareto - A bar chart organized in order of decreasing frequency.

PDI (Polydispersity Index) - A measure for the distribution of the molecular mass as MW / MN

Self Leveling - In crystalline materials, the observation of wall thickness naturally leveling during stretching. As the material deforms, sections which begin to thin `strain harden.' The parts which initially thin are the areas of least resistance to deformation. As these low resistance areas thin, they become the areas of greatest resistance due to the strain induced crystallization. The thicker areas then move until they reach equivalent strength. Without strain hardening, the point of least resistance would continually deform until failure is observed.

Standardized Effects - T-statistics that test the null hypothesis that the effect is 0. The absolute value of the standardized effect is compared to Lenth's PSE to determine if the effect is statistically significant.

Stiffness - Specific energy (energy per unit volume) required to deform the material

Strain - Deformation of the material relative to the reference length.

Strain Hardening - In crystalline materials, the observation of material hardening due to the forced alignment of polymers (generation of crystals) during material deformation.

Strength - The force per unit area required to deform a material. If the point that strength is referenced on the stress/strain curve is the maximum resistance to deformation, it is called the ultimate strength.

Stress - Force per unit area exerted on an object.

Unimodal - Referring to one distribution having one maxima.

Variance - The expectation of the squared deviation of a random variable from the mean.

## Claims

1. A process for simultaneously forming and filling a container that is formed from a high-density polyethylene (HDPE) resin, the process comprising
molding the HDPE resin into a preform; and
biaxially expanding the preform within a cavity of a container mold by introducing an incompressible fluid under pressure into the preform to stretch the preform into the container having a shape of a surrounding mold cavity of the container mold, the HDPE resin comprising:
a melt flow index of 0.3 - 10.0 grams per 10 minutes at a temperature of 190°C under 2.16 kilograms of load through an extrusion plastometer test fixture with die orifice diameter of 2.0955 mm and length of 8.000 mm, wherein the melt flow index is measured according to the description;
a polydispersity index of 4 - 24; and
a density of 0.943 - 0.965 grams per cubic centimeter, wherein an injection liquid temperature is of from 9°C to less than 45°C.

2. The process of Claim 1, wherein:
the HDPE resin is from a chromium catalyst system; and
the HDPE resin has a melt flow index of less than 1 gram per 10 minutes at a temperature of 190°C under 2.16 kilograms of load through an extrusion plastometer test fixture with a die orifice diameter of 2.0955 mm and a length of 8.000 mm.

3. The process of Claim 1, wherein a ratio of a volume of the incompressible fluid encapsulated to a mass of the container formed from the HDPE resin is up to 60ml per gram.

4. The process of Claim 2, wherein a ratio of a volume of the incompressible fluid encapsulated in the preform to a mass of a container formed from the HDPE resin is up to 60ml per gram.

5. The process of Claim 2, wherein a ratio of a volume of the incompressible fluid encapsulated in the preform to a mass of a container formed from the HDPE resin for the fractional melt flow index HDPE resin is as high as 98ml per gram;
wherein the fractional melt flow index of the HDPE resin is multimodal.

6. The process of Claim 1, wherein the HDPE resin is from a Ziegler-Natta catalyst system.

7. The process of Claim 6, wherein the Ziegler-Natta catalyst system is multimodal.

8. The process of Claim 1, wherein the melt flow index is 0.3 - 4.0 grams per 10 minutes at a temperature of 190°C under 2.16 kilograms of load through an extrusion plastometer test fixture with a die orifice diameter of 2.0955 mm and a length of 8.000 mm.

9. The process of Claim 1, wherein the melt flow index is 0.3 - 2.0 grams per 10 minutes at a temperature of 190°C under 2.16 kilograms of load through an extrusion plastometer test fixture with a die orifice diameter of 2.0955 mm and a length of 8.000 mm.

10. The process of Claim 1, wherein the HDPE resin has a polydispersity index of 7 - 24.

11. The process of Claim 1, wherein the HDPE resin has a polydispersity index of 9 - 24.

12. The process of Claim 1, wherein the resin is a multimodal resin having a polydispersity index greater than 7.

## Patentansprüche

1. Verfahren zum gleichzeitigen Bilden und Füllen eines Behälters, der aus einem Polyethylenharz hoher Dichte (HDPE) geformt ist, wobei das Verfahren aufweist
Formen des HDPE-Harzes zu einem Vorformling; und
biaxiales Expandieren des Vorformlings in einem Hohlraum einer Behälterform durch Einleiten eines inkompressiblen Fluids unter Druck in den Vorformling, um den Vorformling zu dem Behälter zu strecken, der eine Formgebung eines umgebenden Formhohlraums der Behälterform hat, wobei das HDPE-Harz aufweist:
einen Schmelzflussindex von 0,3 - 10,0 Gramm pro 10 Minuten bei einer Temperatur von 190°C unter einer Belastung von 2,16 Kilogramm durch eine Extrusions-Plastometer-Prüfvorrichtung mit einem Düsenöffnungsdurchmesser von 2,0955 mm und einer Länge von 8,000 mm, wobei der Schmelzflussindex gemäß der Beschreibung gemessen wird;
einen Polydispersitätsindex von 4 - 24; und
eine Dichte von 0,943 - 0,965 Gramm pro Kubikzentimeter, wobei eine Einspritzflüssigkeitstemperatur von 9°C bis weniger als 45°C beträgt.

2. Verfahren nach Anspruch 1, wobei:
das HDPE-Harz aus einem Chrom-Katalysatorsystem stammt; und
das HDPE-Harz einen Schmelzflussindex von weniger als 1 Gramm pro 10 Minuten bei einer Temperatur von 190 °C unter einer Belastung von 2,16 Kilogramm durch eine Extrusions-Plastometer-Prüfvorrichtung mit einem Düsenöffnungsdurchmesser von 2,0955 mm und einer Länge von 8.000 mm aufweist.

3. Verfahren nach Anspruch 1, wobei ein Verhältnis eines Volumens des eingekapselten inkompressiblen Fluids zu einer Masse des aus dem HDPE-Harz gebildeten Behälters bis zu 60 ml pro Gramm beträgt.

4. Verfahren nach Anspruch 2, wobei ein Verhältnis eines Volumens des in dem Vorformling eingekapselten inkompressiblen Fluids zu einer Masse des aus dem HDPE-Harz gebildeten Behälters bis zu 60 ml pro Gramm beträgt.

5. Verfahren nach Anspruch 2, wobei ein Verhältnis eines Volumens des in dem Vorformling eingekapselten inkompressiblen Fluids zu einer Masse eines aus dem HDPE-Harz gebildeten Behälters für das HDPE-Harz mit fraktioniertem Schmelzflussindex so hoch wie 98 ml pro Gramm ist;
wobei der fraktionierte Schmelzflussindex des HDPE-Harzes multimodal ist.

6. Verfahren nach Anspruch 1, wobei das HDPE-Harz aus einem Ziegler-Natta-Katalysatorsystem stammt.

7. Verfahren nach Anspruch 6, wobei das Ziegler-Natta-Katalysatorsystem multimodal ist.

8. Verfahren nach Anspruch 1, wobei der Schmelzflussindex 0,3 - 4,0 Gramm pro 10 Minuten bei einer Temperatur von 190 °C unter einer Belastung von 2,16 kg durch eine Extrusions-Plastometer-Prüfvorrichtung mit einem Düsenöffnungsdurchmesser von 2,0955 mm und einer Länge von 8,000 mm beträgt.

9. Verfahren nach Anspruch 1, wobei der Schmelzflussindex 0,3 bis 2,0 Gramm pro 10 Minuten bei einer Temperatur von 190 °C unter einer Belastung von 2,16 kg durch eine Extrusions-Plastometer-Prüfvorrichtung mit einem Düsenöffnungsdurchmesser von 2,0955 mm und einer Länge von 8,000 mm beträgt.

10. Verfahren nach Anspruch 1, wobei das HDPE-Harz einen Polydispersitätsindex von 7 - 24 aufweist.

11. Verfahren nach Anspruch 1, wobei das HDPE-Harz einen Polydispersitätsindex von 9 - 24 aufweist.

12. Verfahren nach Anspruch 1, wobei das Harz ein multimodales Harz mit einem Polydispersitätsindex größer als 7 ist.

## Revendications

1. Procédé pour former et remplir simultanément un récipient qui est formé à partir d'une résine de polyéthylène haute densité (HDPE), le procédé comprenant
le moulage de la résine HDPE pour obtenir une préforme ; et
l'expansion biaxiale de la préforme à l'intérieur d'une cavité d'un moule de récipient en introduisant un fluide incompressible sous pression dans la préforme pour étirer la préforme pour obtenir le récipient ayant la forme d'une cavité de moule environnante du moule de récipient, la résine HDPE comprenant :
un indice de fluidité à chaud de 0,3 à 10,0 grammes par 10 minutes à une température de 190°C sous une charge de 2,16 kilogrammes à travers un montage d'essai au plastomètre d'extrusion avec un diamètre d'orifice de filière de 2,0955 mm et une longueur de 8,000 mm, dans lequel l'indice de fluidité à chaud est mesuré selon la description ;
un indice de polydispersité de 4 à 24 ; et
une densité de 0,943 à 0,965 grammes par centimètre cube, où une température de liquide d'injection est comprise entre 9°C et moins de 45°C.

2. Procédé de la revendication 1, dans lequel :
la résine HDPE provient d'un système de catalyseur au chrome ; et
la résine HDPE a un indice de fluidité à chaud inférieur à 1 gramme par 10 minutes à une température de 190°C sous une charge de 2,16 kilogrammes à travers un montage d'essai au plastomètre d'extrusion avec un diamètre d'orifice de filière de 2,0955 mm et une longueur de 8,000 mm.

3. Procédé de la revendication 1, dans lequel le rapport du volume du fluide incompressible encapsulé sur la masse du récipient formé à partir de la résine HDPE peut atteindre 60 ml par gramme.

4. Procédé de la revendication 2, dans lequel le rapport du volume du fluide incompressible encapsulé dans la préforme sur la masse d'un récipient formé à partir de la résine HDPE peut atteindre 60 ml par gramme.

5. Procédé de la revendication 2, dans lequel le rapport du volume du fluide incompressible encapsulé dans la préforme sur la masse d'un récipient formé à partir de la résine HDPE pour la résine HDPE à indice de fluidité à chaud fractionné est aussi élevé que 98 ml par gramme ;
dans lequel l'indice de fluidité à chaud fractionné de la résine HDPE est multimodal.

6. Procédé de la revendication 1, dans lequel la résine HDPE provient d'un système de catalyseur Ziegler-Natta.

7. Procédé de la revendication 6, dans lequel le système de catalyseur Ziegler-Natta est multimodal.

8. Procédé de la revendication 1, dans lequel l'indice de fluidité à chaud est de 0,3 à 4,0 grammes par 10 minutes à une température de 190°C sous une charge 2,16 kilogrammes à travers un montage d'essai au plastomètre d'extrusion avec un diamètre d'orifice de filière de 2,0955 mm et une longueur de 8,000 millimètres.

9. Procédé de la revendication 1, dans lequel l'indice de fluidité à chaud est de 0,3 à 2,0 grammes par 10 minutes à une température de 190°C sous une charge de 2,16 kilogrammes à travers un montage d'essai au plastomètre d'extrusion avec un diamètre d'orifice de filière de 2,0955 mm et une longueur de 8,000 millimètres.

10. Procédé de la revendication 1, dans lequel la résine HDPE a un indice de polydispersité de 7 à 24.

11. Procédé de la revendication 1, dans lequel la résine HDPE a un indice de polydispersité de 9 à 24.

12. Procédé de la revendication 1, dans lequel la résine est une résine multimodale ayant un indice de polydispersité supérieur à 7.
